(19) Europäisches Patentamt
European Patent Office
Office européen des brevets

(11) **EP 2 177 414 B1**

(12) **FASCICULE DE BREVET EUROPEEN**

(45) Date de publication et mention
de la délivrance du brevet:
**14.03.2012 Bulletin 2012/11**

(51) Int Cl.:
***B60W 40/12*** *(2012.01)*

(21) Numéro de dépôt: **09305982.2**

(22) Date de dépôt: **15.10.2009**

(54) **Procédé de détermination de l'écart de rayon entre les roues avant et les roues arrière d'un véhicule automobile**

verfahren zur Ermittlung der Abweichung des Reifenradius zwischen Vorderräder und Hinterräder eines Kraftfahrzeugs

Method for determining the tyre radius variation between the front and rear wheels of a motor vehicle

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.10.2008 FR 0857017**

(43) Date de publication de la demande:
**21.04.2010 Bulletin 2010/16**

(73) Titulaire: **Renault S.A.S.**
**92100 Boulogne-Billancourt (FR)**

(72) Inventeur: **De-Rinaldis, M. Alessandro**
**75018, Paris (FR)**

(56) Documents cités:
**EP-A- 0 655 361     EP-A- 1 160 486**
**EP-A- 1 188 597     EP-A- 1 752 317**
**US-A- 4 825 368     US-A1- 2005 230 172**

**Description**

La présente invention a pour objet un procédé permettant de déterminer l'écart de rayon entre les roues avant les roues arrière d'un véhicule automobile, en particulier d'un véhicule automobile à quatre roues motrices.

Les véhicules automobiles à quatre roues motrices comportent généralement un dispositif de contrôle de répartition de couple sur les quatre roues motrices, prenant en compte les différentes situations de conduite.

En effet, dans différentes situations de conduite, comme par exemple une prise de virage, une chaussée glissante, ou une manoeuvre d'évitement, la répartition des efforts sur les quatre roues du véhicule est modifiée de manière à optimiser la stabilité du véhicule afin de le maintenir dans sa trajectoire et de respecter la volonté du conducteur exprimée, entre autres, par la position des pédales d'accélérateur et de frein ainsi que par l'angle de braquage du volant.

La commande de répartition de couple peut se baser soit sur une estimation du couple de traction transmis aux roues, soit sur le plissement relatif des roues avant et arrière. Dans cette deuxième configuration, il est important de déterminer avec précision l'écart de rayon entre les roues du train avant et les roues du train arrière, car une non détection de cet écart de rayon pourrait perturber le fonctionnement du répartiteur de couple. L'écart de rayon peut être dû par exemple au changement d'un train de roues ou au dégonflage d'une ou plusieurs roues.

Le document FR 2 664 536 décrit un procédé de détection du sous-gonflage d'un pneumatique. Le procédé calcule une fonction linéaire des différences des puissances quadratiques des vitesses angulaires des roues du premier et du deuxième essieu, compare cette fonction à un seuil prédéfini et en déduit un éventuel sous-gonflage de l'un des pneus. Ce procédé est toutefois basé sur des critères qui dépendent fortement du rayon de courbure de la trajectoire, même à faible accélération transversale.

Or, une difficulté rencontrée est que la détection de l'écart de rayon des roues peut être rendue difficile par des perturbations cinématiques ou dynamiques liées à certaines conditions de roulement. En effet, la variation du rayon de roulement, et donc de la vitesse angulaire, induite par un sous-gonflage d'un pneumatique, peut être inférieure aux variations normalement induites par certains phénomènes de la cinématique ou de la dynamique du véhicule sur ces pneumatiques. De telles perturbations peuvent notamment résulter du freinage ou de l'accélération du véhicule, du braquage des roues, d'une circulation du véhicule sur une route en pente montante ou descendante, bombée ou en virage.

EP 1 160 486 A est considéré comme l'état de l'art le plus proche et décrit le préambule de la revendication 1.

La présente invention a pour objectif de remédier à ces inconvénients.

L'invention propose un procédé de détermination de l'écart de rayon de roues entre les roues avant et arrière d'un véhicule automobile, et notamment d'un véhicule automobile à quatre roues motrices, le procédé permettant de déterminer précisément l'écart de rayon en s'affranchissant des perturbations cinématiques et dynamiques lors de la conduite du véhicule.

L'invention a ainsi pour objet un procédé de détermination, dans un véhicule automobile muni de deux roues avant et de deux roues arrière, de l'écart de rayon entre le rayon des roues avant et le rayon des roues arrière.

Conformément au procédé selon l'invention, l'écart de rayon est déterminé en fonction de la vitesse de rotation des roues, lors d'une conduite du véhicule en ligne droite et lorsque le couple transmis aux roues avant est sensiblement égal, voire égal, au couple transmis aux roues arrière.

Le couple transmis aux roues avant et le couple transmis aux roues arrière peuvent notamment être nuls.

La conduite du véhicule en ligne droite permet de s'affranchir des perturbations cinématiques et dynamiques, tandis que l'absence de couple en traction permet de s'affranchir des perturbations dynamiques, en particulier des phénomènes de pseudo-glissement.

Le rayon des roues avant peut être la moyenne du rayon des roues avant et le rayon des roues arrière peut être la moyenne du rayon des roues arrière.

On peut considérer que la conduite du véhicule est en ligne droite lorsque les deux conditions suivantes sont vérifiées :

$$C1 \: : \: -CR_3^{\max} \leq CR_3(t) \leq CR_3^{\max}$$

$$C2 \: : \: \left| \frac{d}{dt}(CR_3(t)) \right| \leq \varepsilon$$

dans lesquelles:

$$CR_3 = k_3 \frac{\left(f_1^2 - f_2^2\right) - \left(f_4^2 - f_3^2\right)}{\left(f_2^2 + f_4^2\right)} \quad \text{où} \quad f_i = \frac{1}{\omega_i},$$

$\omega_1$ est la vitesse de rotation de la roue avant gauche, $\omega_2$ est la vitesse de rotation de la roue avant droit, $\omega_3$ est la vitesse de rotation de la roue arrière gauche, $\omega_4$ est la vitesse de rotation de la roue arrière droit, $CR_3^{max}$ est une valeur maximale prédéterminée de $CR_3$,

$k_3$ est un coefficient de normalisation,

$\varepsilon$ est seuil prédéterminé. $CR_3^{max}$ peut être calculé selon la relation suivante :

$$CR_3^{max} = \left(1 + \frac{E}{R_{\Psi\_max}(V_v)}\right) \frac{\dfrac{1}{\sqrt{1 + \left(\dfrac{L}{R_{\Psi\_max}(V_v)}\right)^2}} + 1}{\dfrac{1}{\sqrt{1 + \left(\dfrac{L}{R_{\Psi\_max}(V_v) + E}\right)^2}} + 1} - 1$$

dans laquelle :

E est la voie moyenne du véhicule,

L est l'empattement du véhicule,

$R_{\psi\text{-}max}(V_v)$ est le rayon de virage maximal, qui est fonction de la vitesse longitudinale du véhicule.

On peut considérer que la conduite du véhicule est en ligne droite lorsque l'une au moins des trois conditions suivantes est vérifiée : l'angle du volant est inférieur en valeur absolue à une valeur prédéterminée, l'accélération latérale du véhicule est inférieure en valeur absolue à une valeur prédéterminée, et la vitesse de lacet du véhicule est inférieure en valeur absolue à une valeur prédéterminée.

La prédétermination de ces conditions pourra être réalisée au moment de la mise au point du système.

On peut considérer que le couple transmis aux roues avant et le couple transmis aux roues arrière sont nuls lorsque le moteur est débrayé et que les freins ne sont pas activés.

On peut aussi considérer que le couple transmis aux roues avant et le couple transmis aux roues arrière sont nuls lorsque la boîte de vitesse est au point mort ou que la pédale d'embrayage est complètement enfoncée.

L'écart de rayon de roues peut être calculé selon la relation suivante :

$$\Delta R = \left[\frac{\omega_1 + \omega_2}{(\omega_3 + \omega_4)} - 1\right] R_0$$

dans laquelle $R_0$ est le rayon nominal de la roue, $\omega_1$ est la vitesse de rotation de la roue avant gauche, $\omega_2$ est la vitesse de rotation de la roue avant droit, $\omega_3$ est la vitesse de rotation de la roue arrière gauche, et $\omega_4$ est la vitesse de rotation de la roue arrière droit.

Le procédé s'applique avantageusement à un véhicule à quatre roues motrices.

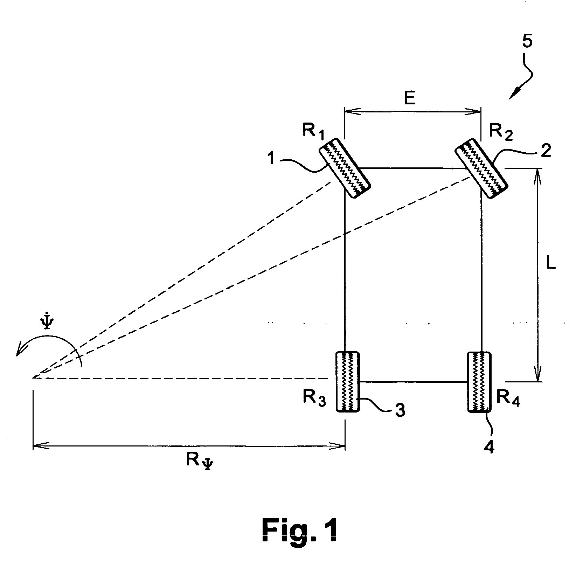

D'autres buts, caractéristiques et avantages de l'invention apparaîtront à la lecture de la description suivante, donnée uniquement à titre d'exemple non limitatif, et faite en référence au dessin annexé sur lequel la figure 1 est une vue schématique d'un véhicule automobile, utile à la compréhension de l'invention.

Le véhicule 5, tel qu'illustré à la figure 1, comprend quatre roues motrices 1,2,3,4, en particulier une roue avant gauche 1 de rayon $R_1$, une roue avant droit 2 de rayon $R_2$, une roue arrière gauche 3 de rayon $R_3$ et une roue arrière droit de rayon $R_4$.

Le véhicule 5, doté d'un dispositif de répartition de couple de type ETC (Electronic Torque Control en langue anglaise), peut répartir le couple entre l'avant et l'arrière en fonction du glissement relatif des roues 1,2,3,4 entre les deux trains. Le glissement relatif est donné par la formule mathématique suivante:

$$\omega_{av} - \omega_{ar} = u \tag{1}$$

dans laquelle :

$\omega_{av}$: moyenne des vitesses de rotation des roues 1,2 du train avant [rad/s] ;
$\omega_{arr}$ : moyenne des vitesses de rotation des roues 3,4 du train arrière [rad/s] ;
$u$ : variable de pilotage du système de répartition de couple [rad/s]

Le glissement relatif risque d'être fortement perturbé par une asymétrie des rayons de roue entre le train avant et le train arrière qui n'était pas prise en compte.

Si on fait l'hypothèse suivante:

$$H1 : V_v = (\omega_i + \Delta\omega_i)R_i \equiv (R_i + \Delta R_i)\omega_i \tag{2}$$

avec

$$V_v = \frac{\omega_3 + \omega_4}{2}$$

$V_v$ étant la vitesse longitudinale du véhicule 5, $\omega_i$ étant la vitesse angulaire de la i-ème roue, il est clair qu'une perturbation sur le rayon de la i-ème roue $\Delta R_i$ correspond à une perturbation de la vitesse de la même roue $\Delta\omega_i$ mesurée par un capteur de vitesse angulaire.

Le procédé selon l'invention va maintenant être décrit selon trois modes de réalisation différents.

Premier mode de réalisation :

Ce mode de réalisation nécessite :

- un capteur de vitesse de roue pour chacune des roues 1,2,3,4 du véhicule 5,
- des moyens de mesure ou d'estimation du couple transmis aux deux trains du véhicule 5.

Dans une première étape, on détecte une conduite en ligne droite.

On fait alors une hypothèse H2 :

$$H2 : \begin{cases} R_3 = R_4 \\ R_1 = R_2 \end{cases} \tag{3}$$

On suppose ainsi que les différences entre les rayons de roue d'un même essieu sont négligeables par rapport à la différence de rayon de roue entre le train avant et le train arrière.

A partir de la vitesse longitudinale du véhicule V$_v$, on peut déduire le rayon de virage maximal d'après la relation suivante :

$$R_{\Psi\_max} = \max\left( R_\Psi = \frac{V_v^2}{a_y^{max}}, R_\Psi = \frac{V_v}{\dot{\Psi}_{max}} \right) \qquad (4)$$

où $\dot{\Psi}_{max}$ et $a_y^{max}$ correspondent aux consignes de virage maximale en termes de vitesse de lacet et d'accélération latérale, respectivement.

Donc, à partir des relations cinématiques facilement dérivables à partir de la figure 1, sur laquelle on prend l'exemple d'un virage à gauche, on peut calculer les valeurs maximales de chaque vitesse de rotation de roue $\omega_i$, ou de chaque fréquence de rotation de la roue f$_i$ = 1/$\omega_i$ :

$$\begin{cases} \dfrac{R_0}{\widetilde{\Psi}_{max}\sqrt{(R_{\Psi\_max})^2 + L^2}} = f_{1\_max} \\[3mm] \dfrac{R_0}{\widetilde{\Psi}_{max}\sqrt{(R_{\Psi\_max} + E)^2 + L^2}} = f_{2\_max} \\[3mm] \dfrac{R_0}{\widetilde{\Psi}_{max}(R_{\Psi\_max})} = f_{3\_max} \\[3mm] \dfrac{R_0}{\widetilde{\Psi}_{max}(R_{\Psi\_max} + E)} = f_{4\_max} \end{cases} \qquad (5)$$

où

$$\widetilde{\Psi}_{max} = \min\left( \dot{\Psi}_{max}, \frac{V_v}{a_y^{max}} \right) \qquad (5.1)$$

R$_0$, L et E étant le rayon nominal de la roue gonflé à la pression indiqué par le constructeur, l'empattement et la voie moyenne du véhicule, respectivement.

On introduit ensuite un critère de comparaison des vitesses de roue sur chaque côté du véhicule 5 qui varie en fonction du virage :

$$CR_3 = k_3 \frac{(f_1^2 - f_2^2) - (f_4^2 - f_3^2)}{(f_2^2 + f_4^2)} \text{ où } f_i = \frac{1}{\omega_i} \qquad (6)$$

k$_3$ étant un coefficient de normalisation.

Si on remplace les termes des équations (5) dans l'expression (6) on retrouve le seuil $CR_3^{max}$ qui est fonction des caractéristiques de la voiture et de sa vitesse :

$$CR_3^{max} = \left(1 + \frac{E}{R_{\Psi\_max}(V_v)}\right) \frac{\frac{1}{\sqrt{1 + \left(\frac{L}{R_{\Psi\_max}(V_v)}\right)^2}} + 1}{\frac{1}{\sqrt{1 + \left(\frac{L}{R_{\Psi\_max}(V_v) + E}\right)^2}} + 1} - 1 \qquad (7)$$

En faisant varier les consignes de virage maximale $\dot{\Psi}_{max}$ et $a_v^{max}$, on peut rendre les bornes $\left(-CR_3^{max}, CR_3^{max}\right)$ plus ou moins proches l'une de l'autre, et par conséquent détecter avec plus ou moins de sensibilité la direction en ligne droite du véhicule 5. On dira donc que le véhicule 5 est conduit en ligne droite si les conditions suivantes sont respectées :

$$C1 : -CR_3^{max} \leq CR_3^{max}(t) \leq CR_3^{max},$$

$$C2 : \left|\frac{d}{dt}(CR_3^{max}(t))\right| \leq \varepsilon,$$

avec $\varepsilon > 0$ (ligne droite dite « stabilisée »).

Lors d'une deuxième étape, on vérifie que le couple transmis aux roues avant 1,2 est sensiblement égal au couple transmis aux roues arrière 3,4.

Pour s'affranchir des perturbations induites sur les vitesses des roues en traction, on va formuler la condition suivante :

$$C3 : C_r^{av} \cong C_r^{ar} \text{ et en particulier } C_r^{av} = C_r^{ar} \cong 0 ,$$

$C_r^{av}$ et $C_r^{ar}$ étant le couple transmis aux roues 1,2 du train avant et aux roues 3,4, du train arrière respectivement.

Cette condition est en particulier vérifiée lorsque le moteur est débrayé et que les freins ne sont pas activés.

Lors d'une troisième étape, on évalue l'écart de rayon de roues.

Si les conditions C1 à C3 sont satisfaites, on évalue l'écart de rayon de roues qui correspond au glissement relatif entre le train avant et arrière multiplié par le rayon nominal des roues :

$$\Delta R = \left[\frac{\omega_1 + \omega_2}{(\omega_3 + \omega_4)} - 1\right] R_0 \qquad (8)$$

Cet écart correspond, grâce à l'hypothèse H1 (équation (2)), à la différence de rayon que l'on cherche à estimer. Pour rendre l'estimation plus fiable, on peut faire la moyenne de l'écart sur un intervalle de temps prédéterminé T :

$$\Delta R_{offset} = \frac{1}{T} \int_{t0}^{t0+T} \Delta R(t)dt \qquad (9)$$

$t_0$ étant l'instant initial d'intégration. Une fois calculée la valeur $\Delta R_{offset}$, on met à jour le rayon des roues 1,2,3,4. Ainsi, le rayon moyen des roues 1,2 du trains avant, noté $R_{12}$, est obtenu en additionnant la moitié du terme (9) au rayon nominal des roues $R_0$ :

$$R_{12} = R_0 + \frac{\Delta R_{offset}}{2} \qquad (10)$$

Le rayon moyen des roues 3,4 du train arrière, noté $R_{34}$, est obtenu en soustrayant la moitié du terme (9) au rayon nominal des roues $R_0$ :

$$R_{34} = R_0 - \frac{\Delta R_{offset}}{2} \qquad (11)$$

Deuxième mode de réalisation :

Ce mode de réalisation nécessite :

- un capteur de vitesse de roue pour chacune des roues 1,2,3,4 du véhicule 5,
- un capteur/détecteur de position au point mort de la boîte de vitesse et/ou un capteur de fin de course de la pédale d'embrayage.

La première étape de détection de la conduite en ligne droite est identique à celle du premier mode de réalisation.
Pour détecter l'absence de couple en traction avant et arrière, on vérifie la condition suivante :

C3 : la boite de vitesse est au point mort ou la pédale d'embrayage est complètement enfoncée.

L'étape d'évaluation de l'écart de rayon est identique à celle du premier mode de réalisation.

Troisième mode de réalisation :

Ce mode de réalisation nécessite :

- un capteur de vitesse de roue pour chacune des roues 1,2,3,4 du véhicule 5,
- un capteur/détecteur de position au point mort de la boîte de vitesse ou un capteur de fin de course de la pédale d'embrayage ou des moyens de mesure ou d'estimation du couple transmis aux deux trains du véhicule 5,
- un capteur de vitesse de lacet ou un capteur de l'accélération latérale ou un capteur de l'angle du volant.

Pour s'affranchir des différents phénomènes dynamiques qui peuvent influencer la mesure du rayon de roulement, on impose une série de conditions qui doivent être respectées et qui identifient une conduite en ligne droite :

C1 : $\left| \alpha_{vol} \right| \leq \alpha_{vol}^{max}$ (volant centré, $\alpha_{vol}^{max}$ étant un angle volant maximal)

ou $\left| a_y \right| \leq a_y^{max}$ (faible accélération latérale, $a_y^{max}$ étant sa valeur maximale)

ou $|\dot{\Psi}| \leq \dot{\Psi}_{max}$ (faible vitesse de lacet, $\dot{\Psi}_{max}$ étant sa valeur maximale)

L'étape de détection de l'absence de couple de traction avant et arrière peut être réalisée conformément au premier ou au deuxième mode de réalisation.

Enfin, l'étape d'évaluation de l'écart de rayon est identique à celle du premier mode de réalisation.

**Revendications**

1. Procédé de détermination, dans un véhicule automobile (5) muni de deux roues avant (1,2,) et de deux roues arrière (3,4), de l'écart de rayon ($\Delta R$) entre le rayon ($R_{12}$) des roues avant (1,2) et le rayon ($R_{34}$) des roues arrière (3,4), **caractérisé en ce que** l'écart de rayon ($\Delta R$) est déterminé en fonction de la vitesse de rotation des roues (1,2,3,4), lors d'une conduite du véhicule (5) en ligne droite et lorsque le couple transmis aux roues avant (1,2) est sensiblement égal au couple transmis aux roues arrière (3,4), et **en ce que** l'écart de rayon est calculé selon la relation suivante :

$$\Delta R = \left[ \frac{\omega_1 + \omega_2}{(\omega_3 + \omega_4)} - 1 \right] R_0$$

dans laquelle $R_0$ est le rayon nominal de la roue, $\omega_1$ est la vitesse de rotation de la roue avant gauche (1), $\omega_2$ est la vitesse de rotation de la roue avant droit (2), $\omega_3$ est la vitesse de rotation de la roue arrière gauche (3), et $\omega_4$ est la vitesse de rotation de la roue arrière droit (4).

2. Procédé selon la revendication 1, **caractérisé en ce que** le couple transmis aux roues avant (1,2) et le couple transmis aux roues arrière (3,4) sont nuls.

3. Procédé selon la revendication 1 ou 2, **caractérisé en ce que** la conduite du véhicule (5) est en ligne droite lorsque les deux conditions suivantes sont vérifiées :

$$C1 \ : \ -CR_3^{\max} \leq CR_3(t) \leq CR_3^{\max}$$

$$C2 \ : \ \left| \frac{d}{dt}(CR_3(t)) \right| \leq \varepsilon$$

dans lesquelles :

$$CR_3 = k_3 \frac{\left(f_1^2 - f_2^2\right) - \left(f_4^2 - f_3^2\right)}{\left(f_2^2 + f_4^2\right)} \ \text{où} \ f_i = \frac{1}{\omega_i},$$

$\omega_1$ est la vitesse de rotation de la roue avant gauche (1), $\omega_2$ est la vitesse de rotation de la roue avant droit (2), $\omega_3$ est la vitesse de rotation de la roue arrière gauche (3), $\omega_4$ est la vitesse de rotation de la roue arrière droit (4),

$CR_3^{\max}$ est une valeur maximale prédéterminée de $CR_3$,

$k_3$ est un coefficient de normalisation,

$\varepsilon$ est seuil prédéterminé.

4. Procédé selon la revendication 3, **caractérisé en ce que** $CR_3^{\max}$ est calculé selon la relation suivante :

$$CR_3^{\max} = \left(1 + \frac{E}{R_{\Psi\_\max}(V_v)}\right) \frac{\dfrac{1}{\sqrt{1+\left(\dfrac{L}{R_{\Psi\_\max}(V_v)}\right)^2}} + 1}{\dfrac{1}{\sqrt{1+\left(\dfrac{L}{R_{\Psi\_\max}(V_v)+E}\right)^2}} + 1} - 1$$

dans laquelle :

E est la voie moyenne du véhicule (5),

L est l'empattement du véhicule (5),

$R_{\Psi\_\max}(V_v)$ est le rayon de virage maximal, fonction de la vitesse longitudinale du véhicule (5).

**5.** Procédé selon la revendication 1 ou 2, **caractérisé en ce que** la conduite du véhicule (5) est en ligne droite lorsque l'une au moins des trois conditions suivantes est vérifiée : l'angle du volant ($\alpha_{vol}$) est inférieur en valeur absolue à une valeur prédéterminée $\left(\alpha_{vol}^{\max}\right)$, l'accélération latérale ($a_y$) du véhicule (5) est inférieure en valeur absolue à une valeur prédéterminée $\left(a_y^{\max}\right)$, et la vitesse de lacet ($\dot{\Psi}$) du véhicule (5) est inférieure en valeur absolue à une valeur prédéterminée ($\dot{\Psi}_{\max}$).

**6.** Procédé selon l'une des revendications 2 à 5, **caractérisé en ce que** le couple transmis aux roues avant (1,2) et le couple transmis aux roues arrière (3,4) sont nuls lorsque le moteur est débrayé et que les freins ne sont pas activés.

**7.** Procédé selon l'une des revendications 2 à 5, **caractérisé en ce que** le couple transmis aux roues avant (1,2) et le couple transmis aux roues arrière (3,4) sont nuls lorsque la boîte de vitesse est au point mort ou que la pédale d'embrayage est complètement enfoncée.

**8.** Procédé selon l'une des revendications 1 à 7, **caractérisé en ce que** le véhicule automobile (5) est un véhicule à quatre roues (1,2,3,4) motrices.

**Claims**

**1.** Method for determining, in a motor vehicle (5) provided with two front wheels (1,2,) and two rear wheels (3,4), the discrepancy in radius ($\Delta R$) between the radius ($R_{12}$) of the front wheels (1,2) and the radius ($R_{34}$) of the rear wheels (3,4), **characterized in that** the discrepancy in radius ($\Delta R$) is determined as a function of the speed of rotation of the wheels (1,2,3,4), when driving the vehicle (5) in a straight line and when the torque transmitted to the front wheels (1,2) is substantially equal to the torque transmitted to the rear wheels (3,4), and **in that** the discrepancy in radius is calculated according to the following relation:

$$\Delta R = \left[\frac{\omega_1 + \omega_2}{(\omega_3 + \omega_4)} - 1\right] R_0$$

in which $R_0$ is the nominal radius of the wheel, $\omega_1$ is the rotation speed of the front left wheel (1), $\omega_2$ is the rotation speed of the front right wheel (2), $\omega_3$ is the rotation speed of the rear left wheel (3), and $\omega_4$ is the rotation speed of the rear right wheel (4).

2. Method according to Claim 1, **characterized in that** the torque transmitted to the front wheels (1,2) and the torque transmitted to the rear wheels (3,4) are zero.

3. Method according to Claim 1 or 2, **characterized in that** the driving of the vehicle (5) is in a straight line when the following two conditions are satisfied:

$$C1 : -CR_3^{max} \leq CR_3(t) \leq CR_3^{max}$$

$$C2 : \left| \frac{d}{dt}(CR_3(t)) \right| \leq \varepsilon$$

in which:

$$CR_3 = k_3 \frac{\left(f_1^2 - f_2^2\right) - \left(f_4^2 - f_3^2\right)}{\left(f_2^2 + f_4^2\right)} \quad \text{where} \quad f_i = \frac{1}{\omega_i},$$

$\omega_1$ is the rotation speed of the front left wheel (1), $\omega_2$ is the rotation speed of the front right wheel (2), $\omega_3$ is the rotation speed of the rear left wheel (3), $\omega_4$ is the rotation speed of the rear right wheel (4),

$CR_3^{max}$ is a predetermined maximum value of $CR_3$,

$k_3$ is a normalization coefficient,

$\varepsilon$ is predetermined threshold.

4. Method according to Claim 3, **characterized in that** $CR_3^{max}$ is calculated according to the following relation:

$$CR_3^{max} = \left(1 + \frac{E}{R_{\Psi\_max}(V_v)}\right) \frac{\dfrac{1}{\sqrt{1 + \left(\dfrac{L}{R_{\Psi\_max}(V_v)}\right)^2}} + 1}{\dfrac{1}{\sqrt{1 + \left(\dfrac{L}{R_{\Psi\_max}(V_v) + E}\right)^2}} + 1} - 1$$

in which:

    E is the mean track of the vehicle (5),
    L is the wheelbase of the vehicle (5),
    $R_{\Psi\_max}(V_v)$ is the maximum turning radius, dependent on the longitudinal speed of the vehicle (5).

5. Method according to Claim 1 or 2, **characterized in that** the driving of the vehicle (5) is in a straight line when at least one of the following three conditions is satisfied: the angle of the steering wheel ($\alpha_{swl}$) is lower in absolute value than a predetermined value ($\alpha_{swl}^{max}$), the lateral acceleration ($a_y$) of the vehicle (5) is lower in absolute value than a predetermined value ($a_y^{max}$) and the yaw rate ($\square$) of the vehicle (5) is lower in absolute value than a predetermined value ($\square_{max}$).

6. Method according to one of Claims 2 to 5, **characterized in that** the torque transmitted to the front wheels (1,2) and the torque transmitted to the rear wheels (3,4) are zero when the engine is idling and when the brakes are not activated.

**7.** Method according to one of Claims 2 to 5, **characterized in that** the torque transmitted to the front wheels (1,2) and the torque transmitted to the rear wheels (3,4) are zero when the gearbox is in neutral or when the clutch pedal is fully depressed.

**8.** Method according to one of Claims 1 to 7, **characterized in that** the motor vehicle (5) is a vehicle with four driving wheels (1, 2, 3, 4).

**Patentansprüche**

**1.** Verfahren, um in einem mit zwei Vorderrädern (1, 2) und mit zwei Hinterrädern (3, 4) versehenen Kraftfahrzeug (5) die Radiusdifferenz ($\Delta R$) zwischen dem Radius ($R_{12}$) der Vorderräder (1, 2) und dem Radius ($R_{34}$) der Hinterräder (3, 4) zu bestimmen, **dadurch gekennzeichnet, dass** die Radiusdifferenz ($\Delta R$) als Funktion der Winkelgeschwindigkeit der Räder (1, 2, 3, 4) bestimmt wird, wenn das Fahrzeug (5) geradeaus fährt und wenn das an die Vorderräder (1, 2) übertragene Drehmoment im Wesentlichen gleich dem an die Hinterräder (3, 4) übertragenen Drehmoment ist, und dass die Radiusdifferenz gemäß der folgenden Beziehung berechnet wird:

$$\Delta R = \left[ \frac{\omega_1 + \omega_2}{(\omega_3 + \omega_4)} - 1 \right] R_0$$

wobei $R_0$ der Nennradius des Rades ist, $\omega_1$ die Winkelgeschwindigkeit des linken Vorderrades (1) ist, $\omega_2$ die Winkelgeschwindigkeit des rechten Vorderrades (2) ist, $\omega_3$ die Winkelgeschwindigkeit des linken Hinterrades (3) ist und $\omega_4$ die Winkelgeschwindigkeit des rechten Hinterrades (4) ist.

**2.** Verfahren nach Anspruch 1, **dadurch gekennzeichnet, dass** das an die Vorderräder (1, 2) übertragene Drehmoment und das an die Hinterräder (3, 4) übertragene Drehmoment jeweils null ist.

**3.** Verfahren nach Anspruch 1 oder 2, **dadurch gekennzeichnet, dass** das Fahrzeug (5) geradeaus fährt, wenn die zwei folgenden Bedingungen erfüllt sind:

$$C1 : -CR_3^{\max} \leq CR_3(t) \leq CR_3^{\max}$$

$$C2 : \left| \frac{d}{dt}(CR_3(t)) \right| \leq \varepsilon$$

wobei

$$CR_3 = k_3 \frac{(f_1^2 - f_2^2) - (f_4^2 - f_3^2)}{(f_2^2 + f_4^2)} \text{, wobei } f_i = \frac{1}{\omega_i}$$

$\omega_1$ die Winkelgeschwindigkeit des linken Vorderrades (1) ist, $\omega_2$ die Winkelgeschwindigkeit des rechten Vorderrades (2) ist, $\omega_3$ die Winkelgeschwindigkeit des linken Hinterrades (3) ist und $\omega_4$ die Winkelgeschwindigkeit des rechten Hinterrades (4) ist,

$CR_3^{\max}$ der vorgegebene Maximalwert von $CR_3$ ist,

$k_3$ ein Normierungskoeffizient ist,

$\varepsilon$ ein vorgegebener Schwellenwert ist.

**4.** Verfahren nach Anspruch 3, **dadurch gekennzeichnet, dass** $CR_3^{max}$ gemäß der folgenden Beziehung berechnet wird:

$$CR_3^{max} = \left(1 + \frac{E}{R_{\Psi\_max}(V_v)}\right) \frac{\frac{1}{\sqrt{1 + \left(\frac{L}{R_{\Psi\_max}(V_v)}\right)^2}} + 1}{\frac{1}{\sqrt{1 + \left(\frac{L}{R_{\Psi\_max}(V_v) + E}\right)^2}} + 1} - 1$$

wobei:

E der mittlere Weg des Fahrzeugs (5) ist,

L der Radstand des Fahrzeugs (5) ist,

$R_{\Psi\_max}(V_v)$ der maximale Krümmungsradius als Funktion der Längsgeschwindigkeit des Fahrzeugs (5) ist.

**5.** Verfahren nach Anspruch 1 oder 2, **dadurch gekennzeichnet, dass** das Fahrzeug (5) geradeaus fährt, wenn wenigstens eine der drei folgenden Bedingungen erfüllt ist: der Lenkradwinkel ($\alpha_{vol}$) ist dem Absolutwert nach kleiner als ein vorgegebener Wert ($\alpha_{vol}^{max}$), die Querbeschleunigung ($a_y$) des Fahrzeugs (5) ist dem Absolutwert nach kleiner als ein vorgegebener Wert ($a_y^{max}$) und die Kurvengeschwindigkeit ($\dot{\Psi}$) des Fahrzeugs (5) ist dem Absolutwert nach kleiner als ein vorgegebener Wert ($\dot{\Psi}_{max}$).

**6.** Verfahren nach einem der Ansprüche 2 bis 5, **dadurch gekennzeichnet, dass** das an die Vorderräder (1, 2) übertragene Drehmoment und das an die Hinterräder (3, 4) übertragene Drehmoment jeweils null ist, wenn der Motor entkuppelt ist und die Bremsen nicht aktiviert sind.

**7.** Verfahren nach einem der Ansprüche 2 bis 5, **dadurch gekennzeichnet, dass** das an die Vorderräder (1, 2) übertragene Drehmoment und das an die Hinterräder (3, 4) übertragene Drehmoment jeweils null ist, wenn das Getriebe im Leerlauf ist oder wenn das Kupplungspedal vollständig niedergetreten ist.

**8.** Verfahren nach einem der Ansprüche 1 bis 7, **dadurch gekennzeichnet, dass** das Kraftfahrzeug (5) ein Fahrzeug mit Vierradantrieb (1, 2, 3, 4) ist.

**Fig. 1**

**RÉFÉRENCES CITÉES DANS LA DESCRIPTION**

**Documents brevets cités dans la description**

- FR 2664536

- EP 1160486 A